# EUROPEAN PATENT APPLICATION

(11) **EP 3 855 843 A1**
(43) Date of publication of application: **28.07.2021**
(21) Application number: 21153888.9
(22) Date of filing: 27.01.2021
(51) Int. Cl.: H04W 72/04, H04W 72/12, H04W 24/02

(54) **METHOD AND APPARATUS FOR TRANSMITTING PACKET MESSAGES BASED ON PRIORITY IN A WIRELESS COMMUNICATION SYSTEM**

(30) Priority: 27.01.2020 US 202062966126 P; 31.12.2020 US 202017138947
(71) Applicant: Sterlite Technologies Limited, Haryana 122002 (IN)
(72) Inventor: PAREKH, Shyam, California, 94563 (US); TANG, Kevin, California, 94568 (US); RAVINDRAN, Ravishankar, California, 94582 (US)
(74) Representative: Hepworth Browne

(57) **Abstract**

A method and apparatus for transmitting a plurality of packet messages based on priority in a wireless communication system (100) is disclosed. The method includes assigning, by at least one controller and at least one network node, a priority number to each of the plurality of packet messages based on requirement of each of an application associated with each of the packet messages and providing, by the at least one controller and the at least one network node, the priority number assigned to each of the plurality of packet messages, to a socket (222/214a/214b/214c) in the wireless communication system. Further, the method includes transmitting, by at least one interface, the plurality of packet messages based on the priority number provided to the socket (222/214a/214b/214c) of each of a plurality of components in the wireless communication system, thereby providing a uniform method for priority assignment and transmission to the at least one interface.

## Description

### BACKGROUND OF THE INVENTION

### Field of the Invention.

The present disclosure relates to a wireless communication system, and more specifically relates to a method and an apparatus for transmitting packet messages based on priority in a wireless communication system.

### Description of Prior Art

The volume of messages over an E2 interface is expected to be significant as a Near- radio intelligent controller (Near-RT RIC) is expected to serve few 100-1000 radio unit (RU) and 100's of central unit (CU) and distribution unit (DU). Similar situation also exists over an A1 interface, where different message types have to be prioritized based on application requirements. The goal is to have a homogenous treatment of these messages over both interfaces, to ensure unified priority treatment to applications.

Hence a need to differentiate these messages is required internally at the Near-RT RIC/Non-RT RIC and E2 node level and at a network that multiplexes this traffic.

### SUMMARY OF THE INVENTION

The principal objective of the present invention is to prioritize A1-AP and E2-AP interface messages based on application requirements.

Another objective of the present invention is to provide a homogeneous prioritized treatment (uniform handling) of messages at A1 and E2 interfaces.

Another objective of the present invention is to provide assignment of priority to each message packet in an O-RAN architecture (for A1 and E2 interfaces). The priority assignment is based on QoS (i.e., uniform handling at each node).

Accordingly, herein discloses a method for transmitting a plurality of packet messages in a wireless communication system, wherein each packet message from the plurality of packet messages is associated with at least one application from a plurality of applications running in the wireless communication system, each of the at least one application is associated with an application requirement corresponding to a transmission time of the each packet message, the wireless communication system comprising a plurality of components including at least one controller, at least one network node and at least one interface, each of the plurality of components having a socket corresponding to an endpoint of each of the plurality of components. The method includes assigning, by the at least one controller and the at least one network node, a priority number to each of the plurality of packet messages based on requirement of each of the application associated with each of the packet messages. Further, the method includes providing, by the at least one controller and the at least one network node, the priority number assigned to each of the plurality of packet messages, to the socket in the wireless communication system. Furthermore, the method includes transmitting, by the at least one interface, the plurality of packet messages based on the priority number provided to the socket of each of the plurality of components in the wireless communication system, thereby providing a uniform method for priority assignment and transmission to the at least one interface in the wireless communication system.

The method for transmitting the plurality of packet messages includes providing a quality of service (QoS) bits in an information element (IE) of each packet message to assign, by a priority configuration unit and an E2 agent controller, the priority number to each of the plurality of packet messages. The method for transmitting the plurality of packet messages includes providing the priority number to the socket of each of the plurality of components by mapping the priority number to at least one differentiated services code point value at the socket, wherein the differentiated services code point value is a packet header value defining a transmission priority of the plurality of packet messages at the socket. The method for transmitting the plurality of packet messages includes assigning a queuing value to each packet message of the plurality of packet messages based on the priority number mapped differentiated services code point value at the socket. The packet message having a higher queuing value is transmitted before the packet message having a lower queuing value, when the higher queuing value indicates higher priority number and the packet message having the lower queuing value is transmitted before the packet message having the higher queuing value, when the lower queuing value indicates higher priority number. The method for transmitting the plurality of packet messages includes arranging the plurality of packet messages based on the assigned queuing value for each of the packet message and transmitting the plurality of queued packet messages over a message bus using the assigned queuing value, wherein the priority number assigned to each of the packet message is used to assign the queuing value.

The at least one controller includes a non-real-time radio access network (RAN) controller (Non-RT-RIC) and a near real-time RAN controller (Near-RT-RIC), the at least one interface includes an A1 interface between the Non-RT-RIC and the Near-RT-RIC, an E2 interface between the Near-RT-RIC and the at least one network node, wherein the at least one network node includes a radio access network (RAN), an E2 node, a base station, a distribution unit, a centralized unit, and a radio unit.

The wireless communication system is an open radio access network system, wherein the open radio access network system includes the Non-RT-RIC, the Near-RT-RIC, the plurality of components, wherein the plurality of components is at least one of: disaggregated, reprogrammable and vendor independent, wherein the Near-RT-RIC comprises vendor independent APIs (application programming interfaces).

The packet message comprises at least one of an A1 interface message and an E2 interface message, wherein the A1 interface message is exchanged between the Non-RT-RIC and the Near-RT-RIC, and the E2 interface message is exchanged between the Near-RT-RIC and the at least one network node. Both the A1 interface message and the E2 interface message indicate at least one of E2 setup messages, reset messages, configuration update messages, service update messages, control messages, subscription messages, policy configuration messages, number messages, A1 policy, machine learning (ML) management and enrichment information types of messages, and messages sent in response to the above messages.

Accordingly, herein discloses a wireless communication system for transmitting a plurality of packet messages, each packet message from the plurality of packet messages is associated with at least one application from a plurality of applications running in the wireless communication system, each of the at least one application is associated with an application requirement corresponding to a transmission time of the each packet message, the wireless communication system comprising a plurality of components including at least one controller, at least one network node and at least one interface, each of the plurality of components having a socket corresponding to an endpoint of each of the plurality of components. The wireless communication system is configured to assign a priority number to each of the plurality of packet messages based on requirement of each of the application associated with each of the packet messages. Further, the wireless communication system is configured to provide the priority number assigned to each of the plurality of packet messages, to the socket in the wireless communication system. Furthermore, the wireless communication system is configured to transmit the plurality of packet messages via the at least one interface based on the priority number provided to the socket of each of the plurality of components in the wireless communication system, thereby providing a uniform priority assignment and transmission to the at least one interface in the wireless communication system.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modification.

### BRIEF DESCRIPTION OF DRAWING

The invention is illustrated in the accompanying drawings, throughout which like reference letters indicate corresponding parts in the various figures. In order to best describe the manner in which the above-described embodiments are implemented, as well as define other advantages and features of the disclosure, a more particular description is provided below and is illustrated in the appended drawings, understanding that these drawings depict only exemplary embodiments of the invention and are not therefore to be considered to be limiting in scope, the embodiments herein will be better understood from the following description with reference to the drawings, in which:
FIG. 1 illustrates an overview of a wireless communication system.
FIG. 2 illustrates various components of a plurality of components.
FIGs. 3a-3b illustrate an E2-AP/A1-AP packet structure.
FIG. 4 is a flow chart illustrating a method for transmitting a plurality of packet messages in the wireless communication system. The operations are performed by the components of an Open-Radio Access Network architecture.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. The wireless communication system.
102. Service Management and Orchestration (SMO) framework.
104. Non-real-time radio access network (RAN) controller (non-RT-RIC).
106. Near real-time RAN controller (near-RT-RIC).
108. Radio access network (RAN).
108a. Radio unit.
108b. Distribution unit.
108c. Centralized unit.
202. Interface manager unit.
204. Priority configuration unit.
206. E2 manager.
208a. A1 manager.
208b. A1 manager.
210b. QoS bit management unit.
212a. Network QoS adaptor.
212b. Network QoS adaptor.
212c. Network QoS adaptor.
214a. Socket.
214b. Socket.
214c. Socket.
216. Message bus.
216a. Message bus.
218. The QoS bit management unit.
220. Network QoS adaptor.
222. Socket.
224. Message bus.
226. The priority configuration unit.
228. The E2 agent controller.
400. Flow chart.
402. Operation.
406. Operation.
F1. An interface.
A1. An interface.
E2. An interface.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Standard Networking Terms and Abbreviation:

RAN: A RAN may stand for radio access network. A radio access network (RAN) may be a part of a telecommunications system which may connect individual devices to other parts of a network through radio connections. A RAN may provide a connection of user equipment such as mobile phone or computer with the core network of the telecommunication systems. A RAN may be an essential part of access layer in the telecommunication systems which utilizes base stations (such as e node B , g node B) for establishing radio connections.

Wireless communication system: A wireless communication system may consist of various network components connected via wireless networks. The wireless networks may comprise of any wireless connectivity technology such as radio links, millimeter wave, etc. In this document, the wireless communication system may include one or more controller connected with radio access networks, which are further connected with a plurality of user equipments.

New RAN: A Radio Access Network which can support either NR/E-UTRA or both and have capabilities to interface with Next Generation Core Network (NG-CN). NG-C/U is a Control/User Plane interface towards NG-CN.

gNB: New Radio (NR) Base stations which have capability to interface with 5G Core named as NG-CN over NG-C/U (NG2/NG3) interface as well as 4G Core known as Evolved Packet Core (EPC) over S1-C/U interface.

LTE eNB: An LTE eNB is evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as anchor for control plane connectivity to NG-CN.

Standalone NR: It is a 5G Network deployment configuration where gNB does not need any assistance for connectivity to core Network, it can connect by its own to NG-CN over NG2 and NG3 interfaces.

Non-standalone E-UTRA: It is a 5G Network deployment configuration where the LTE eNB requires a gNB as anchor for control plane connectivity to NG-CN.

Standalone E-UTRA: It is a typical 4G network deployment where a 4G LTE eNB connects to EPC.

Xn Interface: It is a logical interface which interconnects the New RAN nodes i.e. it interconnects gNB to gNB and LTE eNB to gNB and vice versa.

As per the O-RAN Alliance (O-RAN-WG1 OAM Architecture-v02.00), "the near real time RAN Intelligent Controller (near RT RIC) is a logical function that enables near-real-time control and optimization of O-RAN elements and resources via fine-grained data collection and actions over E2 interface. The Non-Real Time Radio Intelligent Controller (non RT RIC) is a logical function that enables non-real-time control and optimization of RAN elements and resources, AI/ML workflow including model training and updates, and policy based guidance of applications/features in near-RT RIC. It is a part of the Service Management & Orchestration Framework and communicates to the near-RT RIC using the A1 interface. Non-RT control functionality (> 1s) and near-Real Time (near-RT) control functions (< 1s) are decoupled in the RIC. Non-RT functions include service and policy management, RAN analytics and model-training for some of the near-RT RIC functionality, and non-RT RIC optimization. O-CU is O-RAN Central Unit, which is a logical node hosting RRC, SDAP and PDCP protocols. O-CU-CP is O-RAN Central Unit - Control Plane, which is a logical node hosting the RRC and the control plane part of the PDCP protocol. The O-CU-UP is O-RAN Central Unit - User Plane, which is a logical node hosting the user plane part of the PDCP protocol and the SDAP protocol. The O-DU is O-RAN Distributed Unit, which is a logical node hosting RLC/MAC/High-PHY layers based on a lower layer functional split. The O-RU is O-RAN Radio Unit, which is a logical node hosting Low-PHY layer and RF processing based on a lower layer functional split. This is similar to 3GPP's "TRP" or "RRH" but more specific in including the Low-PHY layer (FFT/iFFT, PRACH extraction). The O1 interface is an interface between management entities in Service Management and Orchestration Framework and O-RAN managed elements, for operation and management, by which FCAPS management, Software management, File management shall be achieved. The xAPP is an independent software plug-in to the Near-RT RIC platform to provide functional extensibility to the RAN by third parties." The near-RT RIC controller can be provided different functionalities by using programmable modules as xAPPs, from different operators and vendors.

In the following detailed description of embodiments of the invention, numerous specific details are set forth in order to provide a thorough understanding of the embodiment of invention. However, it will be obvious to a person skilled in the art that the embodiments of the invention may be practiced with or without these specific details. In other instances, well known methods, procedures and components have not been described in detail so as not to unnecessarily obscure aspects of the embodiments of the invention.

Furthermore, it will be clear that the invention is not limited to these embodiments only. Numerous modifications, changes, variations, substitutions and equivalents will be apparent to those skilled in the art, without parting from the scope of the invention.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

Unlike conventional methods, the present invention provides a uniform way of priority marking and socket mapping that is implemented at all nodes in a wireless communication system in a homogeneous way, i.e., the priority marking and socket mapping is implemented at all three nodes (Non RT RIC, Near RT RIC and RAN) over both interfaces (A1 and E2). Hence the present invention can be implemented at any one node individually or at all the nodes simultaneously based on use case.

The term "radio intelligent controller (RIC)" and "radio access network (RAN) intelligent controller (RIC)" are used interchangeably.

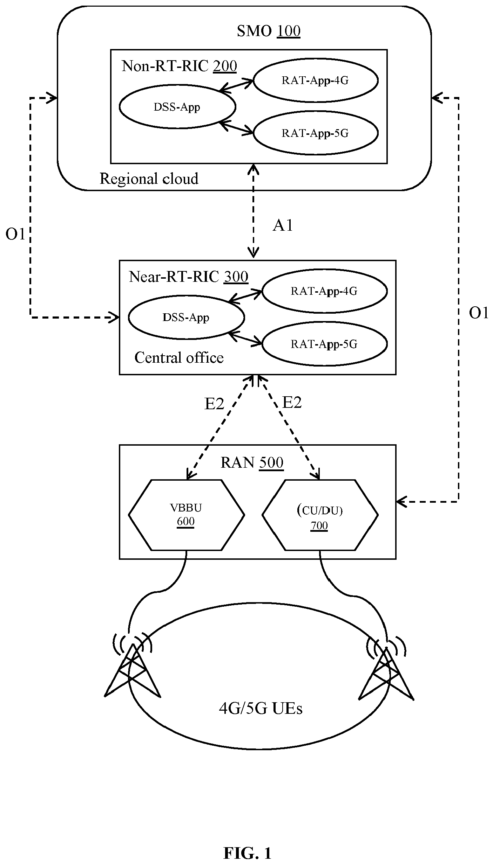

Referring now to the drawings, and more particularly to FIGS. 1 through 4, there are shown preferred embodiments.

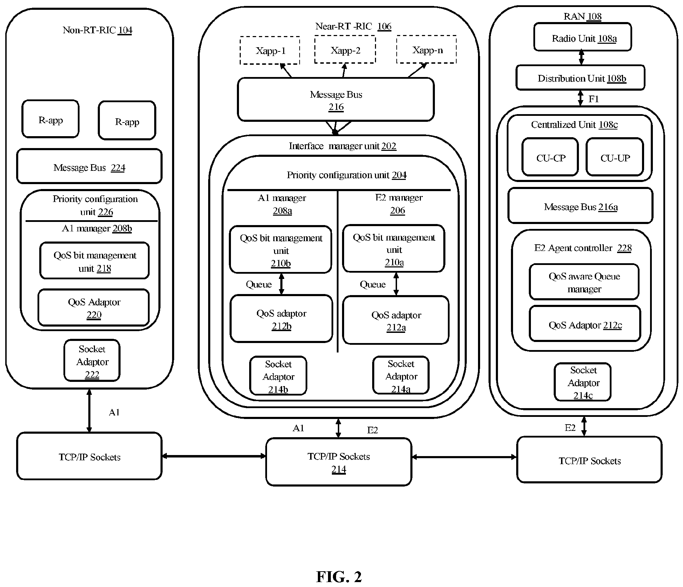

Referring to FIG. 1, an overview of a wireless communication system (100) is depicted. The wireless communication system (100) is an Open-Radio Access Network (O-RAN) architecture. The terms "wireless communication system" and "Open-Radio Access Network (O-RAN) architecture" may synonymously be used and represented with the same reference numeral 100 throughout the disclosure. The wireless communication system (100) includes a Service Management and Orchestration (SMO) framework (102) and a radio access network (RAN) intelligent controller (RIC) (116) connected to a RAN (108). In other words, the wireless communication system (100) includes a plurality of components, wherein the plurality of components includes at least one controller, at least one network node and at least one interface. The at least one controller may be a non-real-time radio access network (RAN) controller (non-RT-RIC) (104) and a near real-time RAN controller (near-RT-RIC) (106). The at least one interface may be an A1 interface between the Non-RT-RIC (104) and the Near-RT-RIC (106) and an E2 interface between the Near-RT-RIC (106) and the at least one network node. Further, the at least one network node may be the radio access network (RAN) (108), an E2 node, a base station (110, 112a, 112b), a distribution unit (108b), a centralized unit (108c), and a radio unit (108a) (explained in conjunction with FIG. 2).

The SMO (102) is configured to provide SMO functions/services such as data collection and provisioning services of the RAN (108). The RAN (108), herein, is implemented in the wireless communication system. The RAN (108) may implement a single radio access technology (RAT) (4G/5G) or multiple RATs (4G and 5G) using the service/serving base station (110) and/or the neighboring base stations (112a-b) located in the wireless communication network (not shown). The data collection of the SMO framework may include, for example, data related to a bandwidth of the wireless communication network and a user equipment (UE) (114). As per O-RAN Alliance (O-RAN-WG1 OAM Architecture-v02.00), the SMO can be defined as "Service Management and Orchestration Framework is responsible for the management and orchestration of the managed elements under its span of control. The framework can for example be a third-party Network Management System (NMS) or orchestration platform. Service Management and Orchestration Framework must provide an integration fabric and data services for the managed functions. The integration fabric enables interoperation and communication between managed functions within the O-RAN domain. Data services provide efficient data collection, storage and movement capabilities for the managed functions. In order to implement multiple OAM architecture options together with RAN service modeling, the modeling of different OAM deployment options and OAM services (integration fabric etc.) must be supported by SMO"

The Non-RT-RIC (104) may host a plurality of applications like R-Apps and may be configured to support intelligent RAN optimization in non-real-time. Further, the Non-RT-RIC (104) may be configured to leverage the SMO services and may be a part of the SMO (102). One such advantage of configuring the RAN (108) within the wireless communication system (100) is leveraging the intellectualization ("Artificial intelligence (Al)/Machine Learning (ML)) of the Non-RT-RIC (104) and the Near-RT-RIC (106).

The Near-RT-RIC (106) may host a plurality of applications like xApps, for example, a cell load monitoring-xApp (x) that is configured to monitor the load of the cells (CIO, average loads, PRB usage values, hysteresis values of the cells, and the like), and candidate cell selection-xApp (y) that is configured to select a best candidate cell from a plurality of candidate cells and further managing the measurement events (such as "A1-A6" events) corresponding to the RSRP/RSRQ reports. The xApps (at the Near-RT-RIC (106)) uses an "E2" interface to collect real-time measurements from the RAN (108) and to provide value added services using these primitives, guided by the policies/configuration and the enrichment data provided by the "A1" interface from the xApps at the Non-RT-RIC (104). An "O1" interface collects data for training in the Non-RT RIC (104) (integrated with the SMO (102)).

In one example, the "E2" and "A1" interface may be used to collect control messages, E2 setup messages, reset messages, configuration update messages, service update messages, control messages, subscription messages, policy configuration messages, number messages, A1 policy, policy trigger messages, indication messages, machine learning (ML) management and enrichment information types of messages, messages sent in response to the above messages and the like. The real-time measurements comprise RSRP/RSRQ measurements, channel quality measurements and the like. The subscription messages such as, for example, RSRP/RSRP event messages, A3 events messages, limited-time based A3 event messages, and the like. The policy trigger messages may be, for example, spectrum allocation policies, radio assignment policies, and the like.

FIG. 2 illustrates various components of the plurality of components. The plurality of components includes the at least one controller, the at least one network node and the at least one interface. The at least one controller includes the Non-RT-RIC (104) and the Near-RT-RIC (106). The plurality of components is at least one of: disaggregated, reprogrammable and vendor independent, wherein the Near-RT-RIC (106) comprises vendor independent APIs (application programming interfaces). The at least one interface includes the A1 interface between the Non-RT-RIC (104) and the Near-RT-RIC (106) and the E2 interface between the Near-RT-RIC (106) and the at least one network node. The at least one network node includes the radio access network (RAN) (108) incorporating the E2 node, the base station (110, 112a, 112b), the distribution unit (108b), the centralized unit (108c), and the radio unit (108a). The E2 node is an E2 agent controller (228). Alternatively, the at least one network node may include the radio access network (RAN) (108), the E2 node, the base station (110, 112a, 112b), the distribution unit (108b), the centralized unit (108c), and the radio unit (108a). The radio access network (RAN) (108) further includes a message bus (216a) and a socket or socket adaptor (214c). The E2 agent controller (228) includes a QoS aware queue manager and a QoS adaptor (212c).

The Near-RT-RIC (106) includes an interface manager unit (202) and a message bus (216). Further, the interface manager unit (202) includes a priority configuration unit (204) comprising an E2 manager (206) and A1 manager (208a). Further, the Non-RT-RIC (104) includes a priority configuration unit (226), an A1 manager (208b), a QoS bit management unit (218), a QoS adaptor (220), a socket adaptor (or a socket) (222) and a message bus (224).

The priority configuration unit (204/226) may be configured to obtain a plurality of packet messages to be transmitted at the level of an application level protocol of each packet message by its originator. In an example, the packet messages comprise at least one of an A1 interface message and E2 interface message, wherein the A1 interface message is transmitted over an A1 interface using the A1 manager (208a/208b) and the E2 interface message is transmitted over the E2 interface using the E2 manager (206). The A1 interface message is exchanged between the Non-RT-RIC (104) and the Near-RT-RIC (106) and the E2 interface message is exchanged between the Near-RT-RIC (106) and the at least one network node. For example, both the A1 interface message and E2 interface message indicate, but not limited to, E2 setup messages, reset messages, configuration update messages, service update messages, control messages, subscription messages, policy messages, indication messages, A1 policy, machine learning (ML) management and enrichment information types of messages, and messages sent in response to the above messages. The A1 interface may be defined as an interface between non-RT RIC and Near-RT RIC to enable policy-driven guidance of Near-RT RIC applications/functions, and support AI/ML workflow. The data packets which are communicated over the A1 interface may be called A1 messages. The E2 interface may be defined as an interface connecting the Near-RT RIC and one or more O-CU-CPs, one or more O-CU-UPs, and one or more O-DUs. The data packets which are communicated over E2 interface may be called E2 messages.

In an example, the E2 manager (206) may be configured to provide E2 services having the specific RAN functions over the E2 interface. The RAN functions may include, for example, are X2/Xn AP, F1AP, E1AP, S1AP, NGAP interfaces and the RAN (108) internal functions like the UE (114) and cell, node management. In another example, while the E2AP specification proposal defines the concept of event triggers, it is the E2SM for X2AP that defines the specific gNB/eNB-side triggers in the X2AP function based on matching X2AP message type, or X2AP IE. The events such as, for example, RIC controlled events. Further, the E2 manager (206) initiates E2 connections with the RAN (108). It is often referred to as xApp "zero"-even if it is actually part of the RIC platform. The RAN configuration information is obtained from the RAN (108) during connection establishment (and later RAN configuration update procedures) is stored by the E2 manager (206).

Similarly, the A1 manager (208b) is configured to enable the Non-RT-RIC (104) function to provide policy-based guidance, AI/ML model management, and enrichment information to the Near-RT RIC (106) for RAN (108) optimization. The A1 manager (208a) may further be configured to communicate with the A1 manager (208b) to perform the optimization at the Near-RT RIC (106).

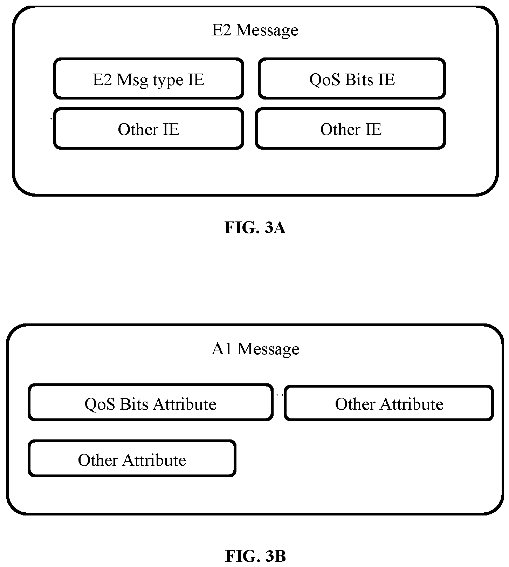

The priority configuration unit (204/226) and the E2 agent controller (228) of the RAN (108) may be further configured to assign (or provide) the quality of service (QoS) bits in an information element (IE) of each packet message, where the QoS bits indicate a priority indication (also synonymously be called as priority number throughout the disclosure) of each packet message (as shown in FIGs. 3a-3b). In other words, the priority configuration unit (204/226) and the E2 agent controller (228) of the RAN (108) may be configured to assign the priority number to each of the plurality of packet messages based on requirement of each application from the plurality of applications associated with each of the packet messages and provide the priority number assigned to each of the plurality of packet messages to the socket or socket adaptor (222/214a/214b/214c) of each of the plurality of components in the wireless communication system (100). A socket may be defined as a software or logical module within a network node which serves as an endpoint for sending or receiving data packets to or from another network node or across the network. The socket may be implemented using a socket adapter, which may provide modeling of standard or nonstandard protocols for communication over TCP/IP sockets. The plurality of packet messages is further transmitted via the at least one interface based on the priority number provided to the socket or socket adaptor (222/214a/214b/214c) of each of the plurality of components in the wireless communication system (100), thereby providing a uniform priority assignment and transmission to the at least one interface in the wireless communication system. The priority number is provided to the socket or socket adaptor (222/214a/214b/214c) of each of the plurality of components by mapping the priority number to at least one differentiated services code point value at the socket. The differentiated services code point value is a packet header value defining a transmission priority of the plurality of packet messages at the socket. Further, a queuing value is assigned to each packet message of the plurality of packet messages based on the priority number mapped differentiated services code point value at the socket or socket adaptor (222/214a/214b/214c). Furthermore, the plurality of packet messages is arranged based on the assigned queuing value for each of the packet message and the plurality of queued packet messages is transmitted over the message bus (224, 216, 216a) using the assigned queuing value, wherein the priority number assigned to each of the packet message is used to assign the queuing value. The packet message having a higher queuing value is transmitted before the packet message having a lower queuing value, when the higher queuing value indicates higher priority number and the packet message having the lower queuing value is transmitted before the packet message having the higher queuing value, when the lower queuing value indicates higher priority number. In an example implementation, the QoS assignment/insertion and priority may be managed by a QoS bit management unit (210b and 218) in the A1 manager (208a/208b) and by the QoS aware queue manager of the E2 agent controller (228). The priority indication (or priority number) comprises one of lower priority indication (or lower priority number) and higher priority indication (or higher priority number).

Specifically, the plurality of applications such as R-APP, at the Non-RT-RIC (104), issues a policy message with a certain priority identified in the A1-AP message header. Further, the A1 manager (208b) may be configured to receive the policy message in its Queue. The Queue is based on the QoS priority (i.e., priority indication/number) for each packet message that may be configured by the QoS bit management unit (218) and to transmit to a network QoS adaptor (220) that manages the socket (222) to the Non-RT RIC (104). In an example, the QoS bit management unit (218) may be configured to transmit the policy messages (e.g., packet messages) based on the assigned queuing value, where the packet message comprising the higher queuing value is transmitted before the packet message comprising the lower queuing value. The transmission is such that, the socket adaptor (222) uses the priority indicated in the A1 header to map it to Differentiated Services Code Points (DSCP) value at the socket level, and writes it to the socket. That is, the priority configuration unit (226) may be configured to perform a mapping of the socket adaptor (222), using the priority indication, to the value at the socket level. The network now uses the DSCP to prioritize the packet and deliver it to the A1 manager (208a) of the Near-RT RIC (106). A Differentiated services code point (DSCP) value may be a packet header value defining a transmission priority of the plurality of packet messages at the socket. Similarly, the Near-RT RIC (106) and the RAN (108) perform their functionalities like the Non-RT-RIC (104), which is explained below.

For example, the network QoS adaptor (or QoS adaptor) (212a/212b/220/212c) may be configured to assign the queuing value to each packet message based on the priority indication by mapping from the application level priority of the socket adaptor (214a/214b/222/214c), using the priority indication (or priority number), to Differentiated Services Code Points (DSCP) values at the socket level. Further, the priority configuration unit (204/226) and/or the E2 agent controller (228) may be configured to prioritize the packet message based on mapped DSCP value and assigning the queueing value to each of the packet message. For example, network QoS adaptor (212a/212b/220/212c) may be configured to the apply specific queuing management actions to arrive at queueing value to each packet message based on the priority indication. For example, the queueing value indicates transmitting order (for example, transmitting order: "1", transmitting order: "2, and up to transmitting order: "n") of the packet messages arranged/decided based on priority indication of each packet message. Thereafter, the packet messages are transmitted in accordance with the transmitting order. That is, the packet message having the higher queuing value is transmitted before the packet message having the lower queuing value, when the higher queuing value indicates higher priority indication (higher priority number). Similarly, the packet message having the lower queuing value is transmitted before the packet message having the higher queuing value, when the lower queuing value indicates higher priority indication (higher priority number).

The A1 manager (208a) may be configured to arrange the A1 messages in its queue to transmit over the message bus (216) for the x-Apps. For example, the A1 manager (208a) may be configured to arrange the plurality of packet messages based on the assigned queuing value for each of the packet message. Further, the A1 manager (208a) may be configured to transmit the plurality of queued packet messages over the message bus (216) using the assigned queueing value. In one example, a priority indication assigned to each of the packet message is used to assign the queuing value. Further, the message bus (216) uses the priority indication assigned to each of the packet message during transmission of the plurality of packet messages. That is, the Queue and the message bus (216) use the QoS marking to transmit the appropriate priority to the A1 message (packet message). The priority of each packet message is based on application requirements. The E2-AP/A1-AP QoS indicators are also used internally in the message bus (216) while passing messages between different micro services. According to ORAN alliance, technical specification, ORAN-WG3.E2AP-v01.00.00, "The E2-AP is the E2 application protocol which supports the functions of E2 interface by signalling procedures". It includes procedures, which are used to establish E2 subscriptions on E2 Node consisting of an event trigger and a sequence of actions, each with a corresponding subsequent action. The A1-AP may be defined as A1 application protocol which provides signaling between non-RT RIC and near RT RIC. In other words, A1-AP provides communication procedures between the non RT RIC and the near RT RIC. The message bus (216) may be configured to deliver the message either point-to-point or using an intermediate broker. For example, transmitting of the plurality of packet messages is based on the assigned queuing value, where the packet message comprising higher (or lower) queuing value is transmitted before the packet message comprising a lower (or higher) queuing value.

In another example, the Near-RT RIC (106) is configured to communicate the packet messages to the RAN (108) over the E2 interface.

Unlike conventional method, the present invention introduces the QoS field in the E2-AP and the A1 -AP header that would enable applications to set the QoS bit, that would be utilized by the E2 manager to prioritize the messages in the Queue.

Unlike conventional method, the present invention provides a uniform way of handling all the messages from different interfaces with regard to priority marking and handling. The reason is that different messages, even over different interfaces (e.g., A1, E2), can arrive at the same Near-RT RIC (106) and lead to controlling the same module or same parameters of the same module (e.g., RAN function), therefore, these messages should be transmitted and queued/processed with unified priority marking.

The RAN (108) comprises the distribution unit (108b) (DU) configured for real time L1 and L2 scheduling functions, and the centralized unit (CU) (108c) configured for non-real time, higher L2 and L3RU. Further, the RAN (108) comprises the radio unit (RU) (108a) configured to manage digital front end (DFE) and the parts of PHY layer, and so on. The DU connects to the RU and executes radio link control (RLC), medium access control (MAC) and parts of the physical (PHY) layer. The CU executes the RRC and Packet Data Convergence Protocol (PDCP) layers. The CU and one DU connected to the CU through Fs-C and Fs-U interfaces (for example "F1" interface shown in FIG. 2) for CP and UP respectively. The CU with multiple DUs will support multiple RAN (108). For example, the DU/CU and RU may be logical node of the RAN (108). The message bus (216a) in the RAN (108) may be, for example, configured to perform the similar operations to that of the message bus (224/216). Similarly, the E2 agent controller (228) at the RAN (108) (i.e., receiving E2 node or E2 node) can use the E2AP QoS field (as described above using the operations of assigning priority by the priority configuration unit (204/226)) to prioritize the message to the CU-CP and CU-UP over the message bus (216a).

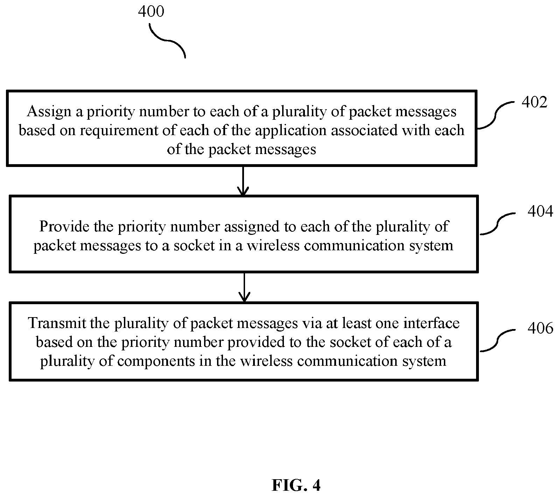

FIG. 4 is a flow chart (400) illustrating a method for transmitting the plurality of packet messages in the wireless communication system (100). Each packet message from the plurality of packet messages is associated with at least one application from the plurality of applications running in the wireless communication system (100). Each of the at least one application is associated with the application requirement corresponding to the transmission time of each packet message. The operations (402-406) are performed by the components of the wireless communication system (100), wherein the wireless communication system (100) is the Open-Radio Access Network system (or architecture).

At S402, the method includes assigning the priority number to each of the plurality of packet messages based on the requirement of each of the application associated with each of the packet messages.

At S404, the method includes providing the priority number assigned to each of the plurality of packet messages to the socket (222/214a/214b/214c) of the plurality of components in the wireless communication system (100).

At S406, the method includes transmitting the plurality of packet messages via the at least one interface based on the priority number provided to the socket (222/214a/214b/214c) of each of the plurality of components in the wireless communication system (100), thereby providing a uniform method for priority assignment and transmission to the at least one interface in the wireless communication system.

In one aspect of the invention, the method provides a uniform priority assignment and transmission to one or more interfaces in the wireless communication system by providing a priority number to each of the packet messages required to be transmitted. The method helps in enabling a homogeneous method for providing priority and transmission of packets as it uses the same procedure at all the components within the wireless communication system. Further, the method does not require a different approach for transmitting packets from one component to another component in a wireless communication system. For example, the method uses the same approach for transmitting packets from a non RT RIC to a near RT RIC over A1 interface; and for transmitting packets from a near RT RIC to RAN nodes, and similar approach vice versa while receiving the packets.

The various actions, acts, blocks, steps, or the like in the flow chart (400) may be performed in the order presented, in a different order or simultaneously. Further, in some embodiments, some of the actions, acts, blocks, steps, or the like may be omitted, added, modified, skipped, or the like without departing from the scope of the invention.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or nonvolatile memory (e.g., magnetic disk storage, optical storage, EEPROM and/or solid-state RAM).

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general-purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

While the above detailed description has shown, described, and pointed out novel features as applied to various embodiments, it can be understood that various omissions, substitutions, and changes in the form and details of the devices or algorithms illustrated can be made without departing from the scope of the disclosure. As can be recognized, certain embodiments described herein can be embodied within a form that does not provide all of the features and benefits set forth herein, as some features can be used or practiced separately from others.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

The present invention also includes the embodiments set out within the following numbered clauses:
1. A method for transmitting a plurality of packet messages in a wireless communication system (100), each packet message from the plurality of packet messages is associated with at least one application from a plurality of applications running in the wireless communication system (100), each of the at least one application is associated with an application requirement corresponding to a transmission time of the each packet message, the wireless communication system (100) comprising a plurality of components including at least one controller, at least one network node and at least one interface, each of the plurality of components having a socket (222/214a/214b/214c) corresponding to an endpoint of each of the plurality of components, the method comprising:
   assigning, by the at least one controller and the at least one network node, a priority number to each of the plurality of packet messages based on requirement of each of the application associated with each of the packet messages;
   providing, by the at least one controller and the at least one network node, the priority number assigned to each of the plurality of packet messages, to the socket (222/214a/214b/214c) in the wireless communication system (100); and
   transmitting, by the at least one interface, the plurality of packet messages based on the priority number provided to the socket (222/214a/214b/214c) of each of the plurality of components in the wireless communication system (100), thereby providing a uniform method for priority assignment and transmission to the at least one interface in the wireless communication system.
2. The method of clause 1, further comprising:
   providing a quality of service (QoS) bits in an information element (IE) of each packet message to assign, by a priority configuration unit (204/226) and an E2 agent controller (228), the priority number to each of the plurality of packet messages.
3. The method of clause 1 or clause 2, further comprising:
   providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c).
4. The method of any preceding clause, further comprising:
   providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
   assigning a queuing value to each packet message of the plurality of packet messages based on the priority number mapped to the differentiated services code point value at the socket (222/214a/214b/214c).
5. The method of any preceding clause, further comprising:
   providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c);
   assigning a queuing value to each packet message of the plurality of packet messages based on the priority number mapped to the differentiated services code point value at the socket (222/214a/214b/214c);
   arranging the plurality of packet messages based on the assigned queuing value for each of the packet message; and
   transmitting the plurality of queued packet messages over a message bus (224, 216, 216a) using the assigned queuing value,
   wherein the priority number assigned to each of the packet message is used to assign the queuing value.
6. The method of any preceding clause, wherein the at least one controller includes a non-real-time radio access network (RAN) controller (Non-RT-RIC) (104) and a near real-time RAN controller (Near-RT-RIC) (106), the at least one interface includes an A1 interface between the Non-RT-RIC (104) and the Near-RT-RIC (106), an E2 interface between the Near-RT-RIC (106) and the at least one network node, wherein the at least one network node includes a radio access network (RAN) (108), an E2 node, a base station (110, 112a, 112b), a distribution unit (108b), a centralized unit (108c), and a radio unit (108a).
7. The method of any preceding clause, wherein the wireless communication system (100) is an open radio access network system, wherein the open radio access network system includes the Non-RT-RIC (104), the Near-RT-RIC (106), the plurality of components, wherein the plurality of components is at least one of: disaggregated, reprogrammable and vendor independent, wherein the Near-RT-RIC (106) comprises vendor independent APIs (application programming interfaces).
8. The method of any preceding clause, wherein the packet message comprises at least one of an A1 interface message and an E2 interface message, wherein the A1 interface message is exchanged between the Non-RT-RIC (104) and the Near-RT-RIC (106), and the E2 interface message is exchanged between the Near-RT-RIC (106) and the at least one network node.
9. The method of any preceding clause, wherein the packet message comprises at least one of an A1 interface message and an E2 interface message, wherein the A1 interface message is exchanged between the near real-time RAN controller (106)and a non-real-time RAN controller (104), and the E2 interface message is exchanged between the near real-time RAN controller (106) and the at least one network node,
   wherein both the A1 interface message and the E2 interface message indicate at least one of E2 setup messages, reset messages, configuration update messages, service update messages, control messages, subscription messages, policy configuration messages, number messages, A1 policy, machine learning (ML) management and enrichment information types of messages, and messages sent in response to the above messages.
10. The method of any preceding clause further comprising:
   providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
   assigning a queuing value to each packet message of the plurality of packet messages based on the priority number mapped to the differentiated services code point value at the socket (222/214a/214b/214c),
   wherein at least one of: the packet message having a higher queuing value is transmitted before the packet message having a lower queuing value, when the higher queuing value indicates higher priority number and the packet message having the lower queuing value is transmitted before the packet message having the higher queuing value, when the lower queuing value indicates higher priority number.
11. A wireless communication system (100) for transmitting a plurality of packet messages, each packet message from the plurality of packet messages is associated with at least one application from a plurality of applications running in the wireless communication system (100), each of the at least one application is associated with an application requirement corresponding to a transmission time of the each packet message, the wireless communication system (100) comprising a plurality of components including at least one controller, at least one network node and at least one interface, each of the plurality of components having a socket (222/214a/214b/214c) corresponding to an endpoint of each of the plurality of components, the wireless communication system (100) is configured to:
   assign a priority number to each of the plurality of packet messages based on requirement of each of the application associated with each of the packet messages;
   provide the priority number assigned to each of the plurality of packet messages to the socket (222/214a/214b/214c) in the wireless communication system (100); and
   transmit the plurality of packet messages via the at least one interface based on the priority number provided to the socket (222/214a/214b/214c) of each of the plurality of components in the wireless communication system (100), thereby providing a uniform priority assignment and transmission to the at least one interface in the wireless communication system.
12. The wireless communication system (100) of clause 11, further configured to provide a quality of service (QoS) bits in an information element (IE) of each packet message to assign the priority number to each of the plurality of packet messages.
13. The wireless communication system (100) of clause 11 or 12, further configured to provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c).
14. The wireless communication system (100) of any one of clauses 11 to 13, further configured to:
   provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
   assign a queuing value to each packet message of the plurality of packet messages based on the priority number mapped to the differentiated services code point value at the socket (222/214a/214b/214c).
15. The wireless communication system (100) of any one of clauses 11 to 14, further configured to:
   provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c);
   assign a queuing value to each packet message of the plurality of packet messages based on the priority number mapped to the differentiated services code point value at the socket (222/214a/214b/214c);
   arrange the plurality of packet messages based on the assigned queuing value for each of the packet message; and
   transmit the plurality of queued packet messages over a message bus (224, 216, 216a) using the assigned queuing value,
   wherein the priority number assigned to each of the packet message is used to assign the queuing value.
16. The wireless communication system (100) of any one of clauses 11 to 15, wherein the at least one controller includes a non-real-time radio access network (RAN) controller (non-RT-RIC) (104) and a near real-time RAN controller (near-RT-RIC) (106), the at least one interface includes an A1 interface between the Non-RT-RIC (104) and the Near-RT-RIC (106), an E2 interface between the Near-RT-RIC (106) and the at least one network node, wherein the at least one network node includes a radio access network (RAN) (108), an E2 node, a base station (110, 112a, 112b), a distribution unit (108b), a centralized unit (108c), and a radio unit (108a).
17. The wireless communication system (100) of any one of clauses 11 to 16, wherein the wireless communication system is an open radio access network system, wherein the open radio access network system includes the Non-RT-RIC (104), the Near-RT-RIC (106), the plurality of components, wherein the plurality of components is at least one of: disaggregated, reprogrammable and vendor independent, wherein the Near-RT-RIC (106) comprises vendor independent APIs (application programming interfaces).
18. The wireless communication system (100) of any one of clauses 11 to 17, wherein the packet message comprises at least one of an A1 interface message and an E2 interface message, wherein the A1 interface message is exchanged between the Non-RT-RIC (104) and the Near-RT-RIC (106), and the E2 interface message is exchanged between the Near-RT-RIC (106) and the at least one network node.
19. The wireless communication system (100) of any one of clauses 11 to 18, wherein the packet message comprises at least one of an A1 interface message and an E2 interface message, wherein the A1 interface message is exchanged between the near real-time RAN controller (106) and a non-real-time RAN controller (104), and the E2 interface message is exchanged between the near real-time RAN controller (106) and the at least one network node,
   wherein both the A1 interface message and the E2 interface message indicate at least one of E2 setup messages, reset messages, configuration update messages, service update messages, control messages, subscription messages, policy configuration messages, number messages, A1 policy, machine learning (ML) management and enrichment information types of messages, and messages sent in response to the above messages.
20. The wireless communication system (100) of any one of clauses 11 to 19 further configured to:
   provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
   assign a queuing value to each packet message of the plurality of packet messages based on the priority number mapped to the differentiated services code point value at the socket (222/214a/214b/214c),
   wherein at least one of: the packet message having a higher queuing value is transmitted before the packet message having a lower queuing value, when the higher queuing value indicates higher priority number and the packet message having the lower queuing value is transmitted before the packet message having the higher queuing value, when the lower queuing value indicates higher priority number.

## Claims

1. A method for transmitting a plurality of packet messages in a wireless communication system (100), each packet message from the plurality of packet messages is associated with at least one application from a plurality of applications running in the wireless communication system (100), each of the at least one application is associated with an application requirement corresponding to a transmission time of the each packet message, the wireless communication system (100) comprising a plurality of components including at least one controller, at least one network node and at least one interface, each of the plurality of components having a socket (222/214a/214b/214c) corresponding to an endpoint of each of the plurality of components, the method comprising:
assigning, by the at least one controller and the at least one network node, a priority number to each of the plurality of packet messages based on requirement of each of the application associated with each of the packet messages;
providing, by the at least one controller and the at least one network node, the priority number assigned to each of the plurality of packet messages, to the socket (222/214a/214b/214c) in the wireless communication system (100); and
transmitting, by the at least one interface, the plurality of packet messages based on the priority number provided to the socket (222/214a/214b/214c) of each of the plurality of components in the wireless communication system (100), thereby providing a uniform method for priority assignment and transmission to the at least one interface in the wireless communication system.

2. The method as claimed in claim 1, further comprising:
providing a quality of service (QoS) bits in an information element (IE) of each packet message to assign, by a priority configuration unit (204/226) and an E2 agent controller (228), the priority number to each of the plurality of packet messages.

3. The method as claimed in claim 1 or 2, further comprising:
providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c).

4. The method as claimed in claim 1 or 2, further comprising:
providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
assigning a queuing value to each packet message of the plurality of packet messages based on the priority number mapped to the differentiated services code point value at the socket (222/214a/214b/214c).

5. The method as claimed in claim 1 or 2, further comprising:
providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c);
assigning a queuing value to each packet message of the plurality of packet messages based on the priority number mapped to the differentiated services code point value at the socket (222/214a/214b/214c);
arranging the plurality of packet messages based on the assigned queuing value for each of the packet message; and
transmitting the plurality of queued packet messages over a message bus (224, 216, 216a) using the assigned queuing value,
wherein the priority number assigned to each of the packet message is used to assign the queuing value.

6. The method as claimed in any preceding claim, wherein the at least one controller includes a non-real-time radio access network (RAN) controller (Non-RT-RIC) (104) and a near real-time RAN controller (Near-RT-RIC) (106), the at least one interface includes an A1 interface between the Non-RT-RIC (104) and the Near-RT-RIC (106), an E2 interface between the Near-RT-RIC (106) and the at least one network node, wherein the at least one network node includes a radio access network (RAN) (108), an E2 node, a base station (110, 112a, 112b), a distribution unit (108b), a centralized unit (108c), and a radio unit (108a).

7. The method as claimed in any preceding claim, wherein the wireless communication system (100) is an open radio access network system, wherein the open radio access network system includes the Non-RT-RIC (104), the Near-RT-RIC (106), the plurality of components, wherein the plurality of components is at least one of: disaggregated, reprogrammable and vendor independent, wherein the Near-RT-RIC (106) comprises vendor independent APIs (application programming interfaces).

8. The method as claimed in any preceding claim, wherein the packet message comprises at least one of an A1 interface message and an E2 interface message, wherein the A1 interface message is exchanged between the Non-RT-RIC (104) and the Near-RT-RIC (106), and the E2 interface message is exchanged between the Near-RT-RIC (106) and the at least one network node.

9. The method as claimed in any preceding claim, wherein the packet message comprises at least one of an A1 interface message and an E2 interface message, wherein the A1 interface message is exchanged between the near real-time RAN controller (106)and a non-real-time RAN controller (104), and the E2 interface message is exchanged between the near real-time RAN controller (106) and the at least one network node,
wherein both the A1 interface message and the E2 interface message indicate at least one of E2 setup messages, reset messages, configuration update messages, service update messages, control messages, subscription messages, policy configuration messages, number messages, A1 policy, machine learning (ML) management and enrichment information types of messages, and messages sent in response to the above messages.

10. The method as claimed any preceding claim further comprising:
providing the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
assigning a queuing value to each packet message of the plurality of packet messages based on the priority number mapped to the differentiated services code point value at the socket (222/214a/214b/214c),
wherein at least one of: the packet message having a higher queuing value is transmitted before the packet message having a lower queuing value, when the higher queuing value indicates higher priority number and the packet message having the lower queuing value is transmitted before the packet message having the higher queuing value, when the lower queuing value indicates higher priority number.

11. A wireless communication system (100) for transmitting a plurality of packet messages, each packet message from the plurality of packet messages is associated with at least one application from a plurality of applications running in the wireless communication system (100), each of the at least one application is associated with an application requirement corresponding to a transmission time of the each packet message, the wireless communication system (100) comprising a plurality of components including at least one controller, at least one network node and at least one interface, each of the plurality of components having a socket (222/214a/214b/214c) corresponding to an endpoint of each of the plurality of components, the wireless communication system (100) is configured to:
assign a priority number to each of the plurality of packet messages based on requirement of each of the application associated with each of the packet messages;
provide the priority number assigned to each of the plurality of packet messages to the socket (222/214a/214b/214c) in the wireless communication system (100); and
transmit the plurality of packet messages via the at least one interface based on the priority number provided to the socket (222/214a/214b/214c) of each of the plurality of components in the wireless communication system (100), thereby providing a uniform priority assignment and transmission to the at least one interface in the wireless communication system.

12. The wireless communication system (100) as claimed in claim 11, further configured to provide a quality of service (QoS) bits in an information element (IE) of each packet message to assign the priority number to each of the plurality of packet messages.

13. The wireless communication system (100) as claimed in claim 11 or 12, further configured to provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c).

14. The wireless communication system (100) as claimed in claim 11 or 12, further configured to:
provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c); and
assign a queuing value to each packet message of the plurality of packet messages based on the priority number mapped to the differentiated services code point value at the socket (222/214a/214b/214c).

15. The wireless communication system (100) as claimed in claim 11 or 12, further configured to:
provide the priority number to the socket (222/214a/214b/214c) of each of the plurality of components by mapping the priority number to at least one differentiated services code point value at the socket (222/214a/214b/214c), wherein the differentiated services code point value is a packet header value defining a transmission priority of the plurality of packet messages at the socket (222/214a/214b/214c);
assign a queuing value to each packet message of the plurality of packet messages based on the priority number mapped to the differentiated services code point value at the socket (222/214a/214b/214c);
arrange the plurality of packet messages based on the assigned queuing value for each of the packet message; and
transmit the plurality of queued packet messages over a message bus (224, 216, 216a) using the assigned queuing value,
wherein the priority number assigned to each of the packet message is used to assign the queuing value.
